# EUROPÄISCHE PATENTSCHRIFT

(11) **EP 3 451 502 B1**
(45) Veröffentlichungstag und Bekanntmachung des Hinweises auf die Patenterteilung: **05.10.2022**
(21) Anmeldenummer: 18191703.0
(22) Anmeldetag: 30.08.2018
(51) Int. Cl.: H02K 1/278

(54) **MEHRPOLIGER ROTOR MIT BROTLAIBFÖRMIGEN ODER TORTENSTÜCKÄHNLICHEN PERMANENTMAGNETEN**
MULTIPOLAR ROTOR WITH LOAF-SHAPED OR PIE SEGMENT PERMANENT MAGNETS
ROTOR MULTIPOLAIRE DOTÉ D'AIMANTS PERMANENTS EN FORME DE MICHE DE PAIN OU RESSEMBLANT AUX PARTS DE CAMEMBERT

(30) Priorität: 30.08.2017 EP 17188593
(43) Veröffentlichungstag der Anmeldung: 06.03.2019
(73) Patentinhaber: maxon international ag, 6072 Sachseln (CH)
(72) Erfinder: Schulze, Jens, 6074 Giswil (CH)
(74) Vertreter: Grünecker Patent- und Rechtsanwälte PartG mbB

(56) Entgegenhaltungen:
- EP-A1- 0 386 239
- EP-A2- 1 475 880
- EP-A2- 1 722 457
- CN-A- 107 104 528
- DE-A1- 3 730 615
- DE-A1-102012 218 498
- GB-A- 2 089 584
- JP-A- H02 142 333
- JP-A- 2003 217 929

## Beschreibung

Die vorliegende Erfindung betrifft einen mehrpoligen Rotor für einen Elektromotor nach dem Oberbegriff des unabhängigen Anspruchs 1.

Bei einem derartigen Rotor handelt es sich um einen Innenläufer, wobei der Rotor mehrere einzelne Permanentmagneten aufweist, die über den Umfang des Rotors verteilt angeordnet sind und auf derjenigen Seite, die dem Luftspalt zwischen einem Stator des Elektromotors und dem Rotor zugewandt ist, in einem Querschnitt des Rotors betrachtet, der orthogonal zu einer Achse des Rotors verläuft, eine konvexe Krümmung aufweisen, wobei die konvexe Krümmung von der Krümmung eines die Permanentmagneten (3) unmittelbar umschreibenden Kreises um die Achse (7) des Rotors (1) abweicht.

Ein Rotor mit mehreren Permanentmagneten ist beispielsweise aus US 20050264122 A1 bekannt. Bei diesem Rotor sind die Permanentmagneten, bezogen auf die Achse des Rotors, in radialer Richtung magnetisiert. Jeweils zwei benachbarte Permanentmagneten bilden ein magnetisches Polpaar. Die konvexe Krümmung der einzelnen Permanentmagneten bietet den Vorteil, dass Rastmomente weitgehend vermieden werden.

Ein Rotor nach dem Oberbegriff des unabhängigen Anspruchs 1 ist aus der CN107104528A bekannt. Weiterer verwandter Stand der Technik ist ferner aus DE3730615A1, EP1475880A2, EP1722457A2, JP2003217929A, JPH02142333A, DE102012218498A1, EP0386239A1 und GB2089584A bekannt.

Die vorliegende Erfindung hat sich zur Aufgabe gestellt, einen mehrpoligen Rotor der gattungsgemäßen Art dahingehend zu verbessern, dass das Rastmoment weiter reduziert wird und/oder der Anteil gewisser Harmonischer, insbesondere der dritten Harmonischen bei Dreieckschaltung unterdrückt wird.

Die Aufgabe wird durch die Merkmale des unabhängigen Anspruchs 1 gelöst. Demnach liegt bei einem mehrpoligen Rotor gemäß dem Oberbegriff des unabhängigen Anspruchs 1 dann eine erfindungsgemäße Lösung der Aufgabe vor, wenn jeweils vier in Umfangsrichtung des Rotors nebeneinanderliegende Permanentmagneten zusammen ein magnetisches Polpaar bilden, wobei die Magnetisierungsrichtung jedes einzelnen Permanentmagneten nicht in radialer Richtung verläuft sondern zu einer Bezugsebene, die durch die Achse des Rotors und durch die Mitte des jeweiligen Permanentmagneten verläuft, einen Winkel α zwischen 30° und 60° einschließt, wobei der Rotor eine Hülle aufweist, wobei die Permanentmagneten außen von der Hülle umgeben sind.

Die Erfindung bietet den Vorteil, dass das Rastmoment weiter reduziert wird und/oder der Anteil gewisser Harmonischer, insbesondere der dritten Harmonischen bei Dreieckschaltung unterdrückt wird. Durch die vorliegende Erfindung ist es möglich, beide Ziele anzustreben. Je nach Technologie kann nur ein Ziel angestrebt werden, so bei einem genuteten Motor in Sternschaltung nur das Rastmoment zu reduzieren oder bei einem Motor mit eisenloser Wicklung in Dreieckschaltung nur die 3. Harmonische zu unterdrücken, oder aber beide Ziele gleichzeitig angestrebt werden, so bei einem genuteten Motor, der in Dreieckschaltung betrieben werden soll.

Die einzelnen Permanentmagneten sind vorzugsweise gleichmäßig über den Umfang des Rotors verteilt angeordnet. Bei der Achse des Rotors handelt es sich um die Drehachse bzw. um die Rotationssymmetrieachse des Rotors. Ein Polpaar wird durch eine Vierergruppe von Magneten gebildet. Jeder vierte Permanentmagnet hat in Bezug auf seine jeweilige Bezugsebene dieselbe Magnetisierungsrichtung. Dabei bilden jeweils die ersten beiden Permanentmagneten einer Vierergruppe zusammen einen magnetischen Pol, beispielsweise einen magnetischen Nordpol. Der dritte Permanentmagnet und der vierte Permanentmagnet der Vierergruppe bilden zusammen einen entgegengesetzten magnetischen Pol, beispielsweise einen magnetischen Südpol. Die Anzahl der einzelnen Permanentmagneten muss somit durch die Zahl 4 teilbar sein.

Die Ausführung der vorliegenden Erfindung hat mehrere optimierbare Freiheitsgrade: Der Winkel der Magnetisierung a, der luftspaltseitige Radius r der Permanentmagneten, und das Zentrum des Radius des Permanentmagneten können frei gewählt werden. Ferner kann die Rundung des Permanentmagneten auch in einer anderen Form als einer Kreisform gewählt werden und die Innenkontur der Permanentmagneten bzw. des Rückschlusses kann variiert werden. Selbst wenn die Unterdrückung eines Rastmomentes und der Harmonischen angestrebt werden, müssen nicht alle optimierbaren Freiheitsgrade zur Erreichung des Optimierungszieles genutzt werden.

Vorteilhafte Ausführungsformen der vorliegenden Erfindung sind Gegenstand der Unteransprüche.

Gemäß einer ersten Ausführungsform der vorliegenden Erfindung weist der Rotor einen Rotorkern auf. Die Erfindung eignet sich aber auch für einen Rotor, welcher gemäß einer alternativen Ausführungsform keinen Rotorkern aufweist.

Gemäß einer bevorzugten Ausführungsform der vorliegenden Erfindung schließt die Magnetisierungsrichtung jedes einzelnen Permanentmagneten zu der jeweiligen Bezugsebene einen Winkel zwischen 40° und 50° ein. Dabei lässt sich das Rastmoment am besten vermeiden, wenn der Winkel, den die Magnetisierungsrichtung jedes einzelnen Permanentmagneten zu der jeweiligen Bezugsebene einschließt, weiter vorzugsweise 45° beträgt.

Weiter vorzugsweise bilden jeweils zwei in Umfangsrichtung des Rotors nebeneinanderliegende Permanentmagneten zusammen einen magnetischen Pol, wobei die Magnetisierungsrichtungen dieser beiden Permanentmagneten in Bezug auf eine Zwischenebene, die mittig zwischen diesen beiden Permanentmagneten und durch die Achse des Rotors verläuft, symmetrisch zueinander sind.

Weiter vorzugsweise weist der dritte Permanentmagnet einer Gruppe von vier Permanentmagneten, die in Umfangsrichtung unmittelbar aufeinanderfolgen, bezogen auf die jeweilige Bezugsebene eine Magnetisierungsrichtung auf, die entgegengesetzt zu der auf die jeweilige Bezugsebene bezogenen Magnetisierungsrichtung des ersten Permanentmagneten dieser Gruppe von Permanentmagneten verläuft, wobei der vierte Permanentmagnet dieser Gruppe von Permanentmagneten bezogen auf die jeweilige Bezugsebene eine Magnetisierungsrichtung aufweist, die entgegengesetzt zu der auf die jeweilige Bezugsebene bezogenen Magnetisierungsrichtung des zweiten Permanentmagneten dieser Gruppe von Permanentmagneten verläuft.

Gemäß einer weiteren bevorzugten Ausführungsform der vorliegenden Erfindung berühren sich die Permanentmagneten seitlich und bilden zusammen einen idealerweise geschlossenen Ring. Dadurch wird ein hoher Wirkungsgrad erreicht. Durch die Abstoßung zwischen zwei Magneten des gleichen Pols verteilen sich die Magneten gleichmäßig am Umfang. Dadurch entfällt eine aufwändige Positionierung der Permanentmagneten auf dem Rotorkern bei der Herstellung des Rotors, was sowohl den Aufwand als auch die Kosten bei der Produktion senkt.

Weiter vorzugsweise ist vorgesehen, dass sich die benachbarten Permanentmagneten jeweils am Polübergang flächig berühren und die benachbarten Permanentmagneten, die zum gleichen Pol gehören, einen Spalt mit einer Breite unter 0.3 mm zueinander bilden oder einander berühren.

Besonders vorteilhaft ist es, wenn die Seitenflächen der Permanentmagneten in Bezug auf die Achse des Rotors radial verlaufen, sodass die Permanentmagneten seitlich flächig aneinander anliegen.

Sowohl zur Vermeidung eines Rastmoments als auch zur Unterdrückung von Harmonischen ist es von besonderem Vorteil, wenn der Radius der konvexen Krümmung kleiner ist als der Radius eines die Permanentmagneten unmittelbar umschreibenden, das heißt am Luftspalt einhüllenden Kreises um die Achse des Rotors. Vorzugsweise ist insbesondere der mittlere Radius der konvexen Krümmung kleiner als der Radius des die Permanentmagneten unmittelbar umschreibenden Kreises um die Achse des Rotors. Der Radius des einhüllenden Kreises entspricht dem maximalen Außendurchmesser des Rotors, sofern es sich bei dem Rotor um einen Innenläufer handelt. Besonders bevorzugt beträgt der Radius bzw. der mittlere Radius der konvexen Krümmung zwischen 15% und 70%, bevorzugt zwischen 20 % und 50 % des Radius des die Permanentmagneten unmittelbar umschreibenden Kreises um die Achse des Rotors.

Gemäß einer weiteren bevorzugten Ausführungsform der vorliegenden Erfindung sind die Permanentmagneten mittels Klebstoff miteinander und/oder an dem Rotorkern des Rotors befestigt. Dadurch ergibt sich eine besonders einfache und kostengünstige Herstellung des erfindungsgemäßen Rotors. Der Rotorkern kann entweder aus einem weichmagnetischen Material bestehen, sodass der Rotorkern einen magnetischen Rückschluss für die Permanentmagneten bildet. Alternativ kann für den Rotorkern auch ein unmagnetisches Material verwendet werden.

Gemäß einer weiteren bevorzugten Ausführungsform der vorliegenden Erfindung sind die Magneten vorzugsweise durch einen Klebstoff oder eine Füllmasse mit der Hülle und/oder einer innen liegenden Welle verbunden. Gemäß einer weiteren bevorzugten Ausführungsform der vorliegenden Erfindung wird der Rotor mit Hülle ohne durchgehenden Rückschluss oder Welle ausgeführt.

Gemäß einer weiteren Ausführungsform der vorliegenden Erfindung ist die der konvex gekrümmten Seite gegenüberliegende Rückseite der Permanentmagneten eben ausgestaltet. Die Rückseite verläuft sozusagen tangential zur Mantelfläche des Rotorkerns, sofern es sich bei dem Rotor um einen Innenläufer handelt. Bei dieser Ausführungsform ist der Herstellungsaufwand für die Permanentmagneten relativ gering.

Die Montage des erfindungsgemäßen Rotors kann vereinfacht werden, wenn die der konvex gekrümmten Seite gegenüberliegende Rückseite der Permanentmagneten gemäß einer alternativen Ausführungsform eine Krümmung aufweist, die dem Radius des Rotorkerns entspricht. Bei dieser Ausführungsform ergibt sich ferner ein besonders hoher Wirkungsgrad durch eine Optimierung des Magnetfelds, das durch den Rotor aufgebaut wird. Der Radius des Rotorkerns, an den die Krümmung der Rückseite der Permanentmagneten angepasst ist, ist bei einem Innenläufer der Außenradius des Rotorkerns.

Der Rotor kann gemäß einer weiteren bevorzugten Ausführungsform der vorliegenden Erfindung insgesamt 8, 12 oder 16 einzelne Permanentmagneten aufweisen. Entscheidend ist jedenfalls, dass die Anzahl der Permanentmagneten durch die Zahl 4 teilbar ist.

Bevorzugt sind die Permanentmagneten gemäß einer weiteren Ausführungsform der vorliegenden Erfindung im Querschnitt brotlaibförmig ausgestaltet. Dies bedeutet, der Querschnitt der Permanentmagneten weist eine Basis, zwei schräg dazu verlaufende und sich ausgehend von der Basis voneinander entfernende Seiten, sowie eine der Basis gegenüberliegende konvex gekrümmte Außenseite auf. Die beiden Seiten des Querschnitts verlaufen in Bezug auf die Achse des Rotors vorzugsweise radial.

In einer alternativen aber dennoch bevorzugten Ausführungsform sind die Permanentmagneten im Querschnitt tortenstückförmig. Dies bedeutet, im Vergleich zur brotlaibförmigen Ausführungsform ist die Basis des Querschnitts entweder kürzer als die beiden Seiten oder der Querschnitt weist gar keine Basis auf. Die beiden Seiten des Querschnitts verlaufen auch hier schräg zueinander und bilden zusammen mit der konvex gekrümmten Außenseite die Form eines Tortenstücks.

Weiter vorzugsweise weisen die Permanentmagneten alle dieselbe Geometrie auf und sind weiter vorzugsweise jeweils symmetrisch zur jeweils eigenen Bezugsebene.

Die Erfindung stellt auch einen elektrischen Motor mit einem Stator und einem erfindungsgemäßen Rotor bereit, wobei der Rotor gemäß einer oder mehrerer der zuvor beschriebenen Ausführungsformen ausgestaltet sein kann.

Ausführungsbeispiele der vorliegenden Erfindung werden im Folgenden anhand von Zeichnungen näher erläutert.

Es zeigen:
- Figur 1:: eine Schrägansicht eines mehrpoligen Rotors gemäß einem ersten Ausführungsbeispiel der vorliegenden Erfindung,
- Figur 2:: einen Querschnitt durch den erfindungsgemäßen Rotor aus Figur 1,
- Figur 3:: eine Detailansicht der Darstellung aus Figur 2,
- Figur 4:: eine Abwandlung des erfindungsgemäßen mehrpoligen Rotors aus den Figuren 1 bis 3 im Querschnitt,
- Figur 5:: eine Detailansicht der Darstellung aus Figur 4,
- Figur 6:: einen Querschnitt durch einen mehrpoligen Rotor gemäß einem weiteren Ausführungsbeispiel der vorliegenden Erfindung,
- Figur 7:: einen Querschnitt durch einen mehrpoligen Rotor mit Hülle und tortenstückähnlichen Permanentmagneten ohne Rotorkern und ohne Welle,
- Figur 8:: einen Querschnitt durch einen mehrpoligen Rotor mit Hülle und tortenstückähnlichen bis brotlaibförmigen Permanentmagneten mit innen durchgeführter Welle,
- Figur 9:: einen Querschnitt durch einen mehrpoligen Rotor, bei dem das Kreiszentrum der Außenkontur der Permanentmagneten nicht symmetrisch liegt, und
- Figur 10:: einen Querschnitt durch einen mehrpoligen Rotor, bei dem die Außenkontur der Permanentmagneten nicht einem Kreissegment entspricht.

Für die folgenden Ausführungen gilt, dass gleiche Teile durch gleiche Bezugszeichen bezeichnet werden. Sofern in einer Figur Bezugszeichen enthalten sind, auf die in der zugehörigen Figurenbeschreibung nicht näher eingegangen wird, so wird auf vorangehende oder nachfolgende Figurenbeschreibungen Bezug genommen.

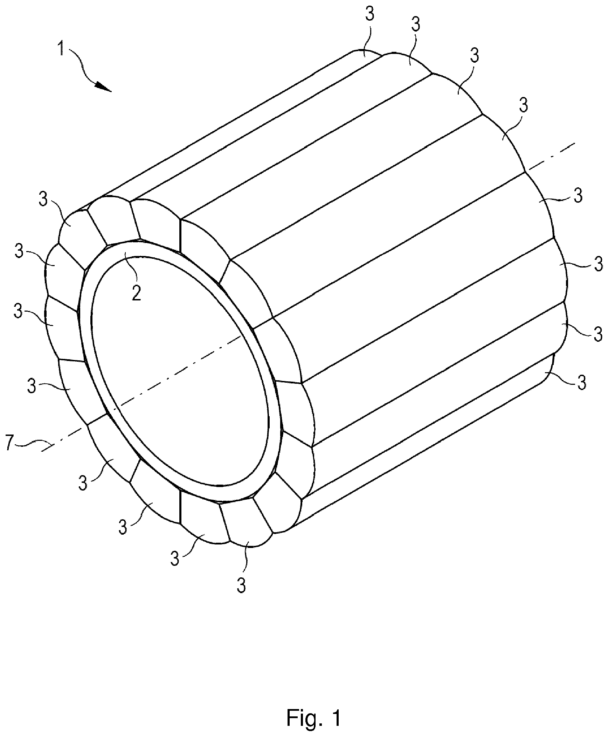

Figur 1 zeigt ein erstes Ausführungsbeispiel eines erfindungsgemäßen mehrpoligen Rotors 1 in einer Schrägansicht. Der Rotor 1 weist einen Rotorkern 2 sowie eine Vielzahl von im wesentlichen stabförmigen Permanentmagneten 3 auf, die gleichmäßig über den Umfang des Rotorkerns verteilt angeordnet sind. Bei dem gezeigten Ausführungsbeispiel sind insgesamt 16 einzelne Permanentmagneten 3 vorgesehen. Die Achse des Rotors ist in den Figuren mit dem Bezugszeichen 7 bezeichnet.

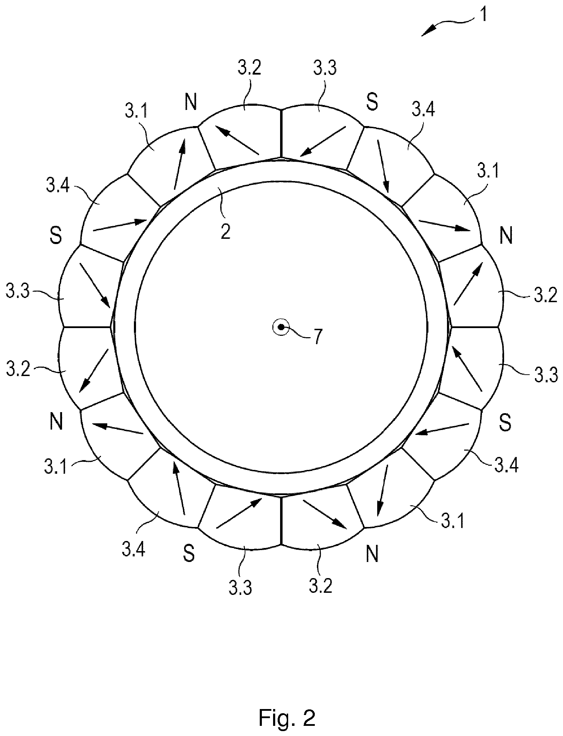

Wie insbesondere aus Figur 2 ersichtlich ist, weisen die Permanentmagneten, in einem Querschnitt orthogonal zur Achse 7 des Rotors betrachtet, auf der Außenseite eine konvexe Krümmung auf. Die Permanentmagneten sind dabei im Querschnitt brotlaibförmig ausgestaltet. Jeweils vier benachbarte bzw. in Umfangsrichtung des Rotors aufeinanderfolgende Permanentmagneten bilden zusammen ein magnetisches Polpaar des Rotors. Der erste Permanentmagnet 3.1 und der zweite Permanentmagnet 3.2 einer solchen Vierergruppe bilden zusammen einen magnetischen Nordpol N des Rotors. Der dritte Permanentmagnet 3.3 und der vierte Permanentmagnet 3.4 jeder Vierergruppe bilden zusammen einen magnetischen Südpol S.

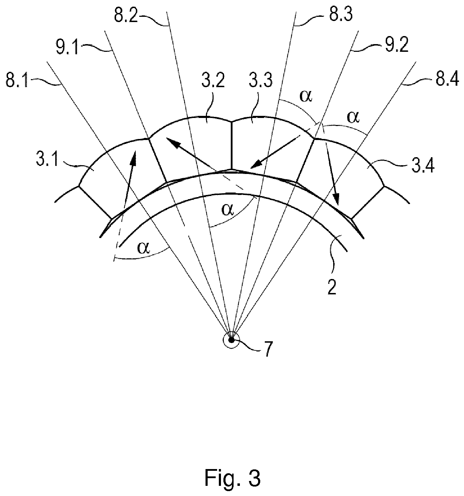

Figur 3 zeigt eine Detailansicht des Querschnitts aus Figur 2. In dieser Detailansicht ist eine Vierergruppe von Permanentmagneten gezeigt. Jedem Permanentmagneten ist eine Bezugsebene 8 zugeordnet, die durch die Achse 7 des Rotors und durch die Mitte des jeweiligen Permanentmagneten verläuft. Die Bezugsebene des ersten Permanentmagneten 3.1 ist mit dem Bezugszeichen 8.1 bezeichnet. Die Bezugsebene des zweiten Permanentmagneten 3.2 ist mit dem Bezugszeichen 8.2 bezeichnet. Die Bezugsebene des dritten Permanentmagneten 3.3 ist mit dem Bezugszeichen 8.3 bezeichnet. Und die Bezugsebene des vierten Permanentmagneten 3.4 ist mit dem Bezugszeichen 8.4 bezeichnet. Die Magnetisierungsrichtung jedes einzelnen Permanentmagneten schließt zu der jeweiligen Bezugsebene des Permanentmagneten einen Winkel α von 45° ein. Dabei sind die Magnetisierungsrichtungen des ersten Permanentmagneten 3.1 und des zweiten Permanentmagneten 3.2 in Bezug auf eine Zwischenebene 9.1, die mittig zwischen diesen beiden Permanentmagneten und durch die Achse 7 des Rotors verläuft, symmetrisch zueinander. Gleichermaßen sind die Magnetisierungsrichtungen des dritten Permanentmagneten 3.3 und des vierten Permanentmagneten 3.4 in Bezug auf eine zweite Zwischenebene 9.2, die mittig zwischen den Permanentmagneten 3.3 und 3.4 sowie durch die Achse 7 des Rotors verläuft, ebenfalls symmetrisch zueinander. Ferner ist zu beobachten, dass der dritte Permanentmagnet 3.3 bezogen auf seine Bezugsebene 8.3 eine Magnetisierungsrichtung aufweist, die entgegengesetzt zu der auf die Bezugsebene 8.1 bezogenen Magnetisierungsrichtung des ersten Permanentmagneten 3.1 verläuft. Der vierte Permanentmagnet 3.4 weist bezogen auf seine Bezugsebene 8.4 eine Magnetisierungsrichtung auf, die entgegengesetzt zu der auf die Bezugsebene 8.2 des zweiten Permanentmagneten verläuft.

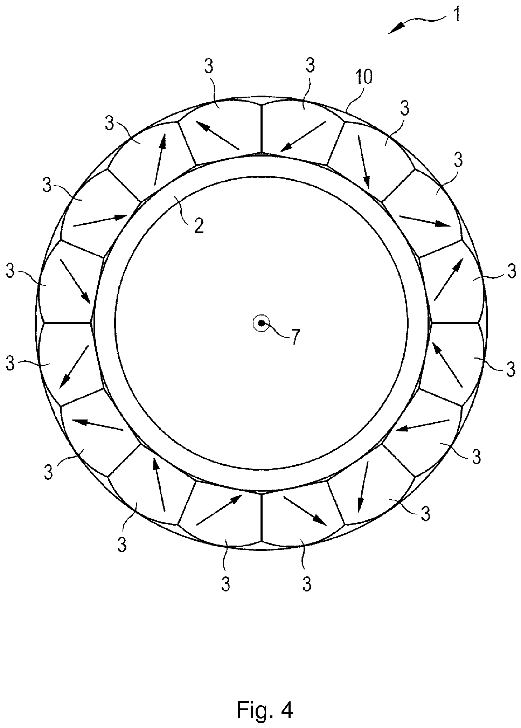

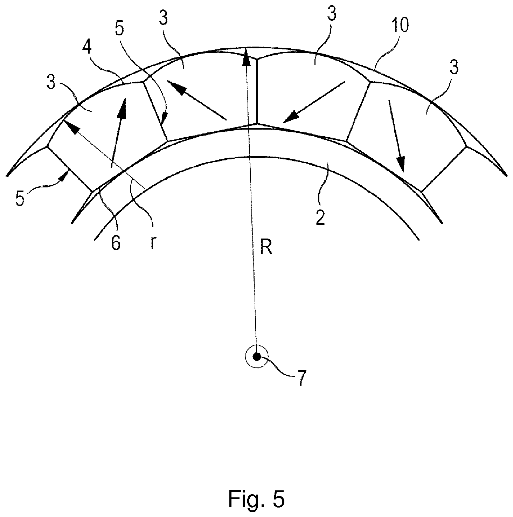

Bei dem Ausführungsbeispiel aus den Figuren 1 bis 3 sind die Permanentmagneten mittels Klebstoff miteinander und an dem Rotorkern 2 des Rotors befestigt. Figur 4 zeigt eine Abwandlung, bei der entweder zusätzlich oder alternativ eine Bandagierung 10 vorgesehen ist, mittels der die Permanentmagneten 3 an dem Rotorkern 2 befestigt sind. Die Bandagierung weist, wie aus Figur 5 ersichtlich ist, einen Radius R bezogen auf die Achse 7 des Rotors auf, der im wesentlichen dem Radius eines Kreises entspricht, der die Permanentmagneten 3 am Außenumfang des Rotors einhüllt.

In Figur 5 ist ferner zu erkennen, dass der Radius r der konvexen Krümmung an der Außenseite 4 der Permanentmagneten bedeutend kleiner ist als der Außenradius R des Rotors. Bei den Ausführungsbeispielen, die in den Figuren 1 bis 6 gezeigt sind, beträgt das Verhältnis zwischen dem Radius r und dem Radius R etwa 1/3. Ferner sind bei sämtlichen dargestellten Ausführungsbeispielen die Seitenflächen 5 der Permanentmagneten 3 derart ausgestaltet, dass sie bezogen auf die Achse 7 des Rotors radial verlaufen, sodass die Permanentmagneten 3 seitlich flächig aneinander anliegen.

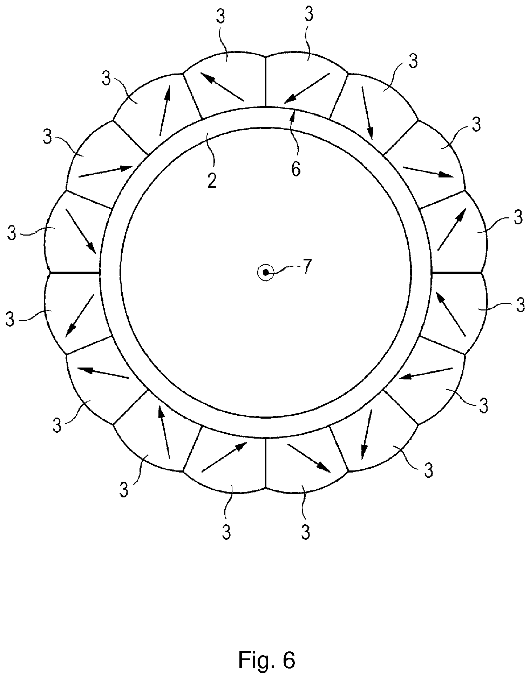

Bei den Ausführungsbeispielen in den Figuren 1 bis 5 ist die Unterseite 6 der Permanentmagneten 3 jeweils eben. Sie verläuft damit tangential zur Mantelfläche des Rotorkerns 2. Figur 6 hingegen zeigt ein Ausführungsbeispiel, bei dem die Unterseite 6 der Permanentmagneten 3 eine Krümmung aufweist, deren Radius an den Radius des Außenumfangs des Rotorkerns 2 angepasst ist, sodass sich die Permanentmagneten 3 an den Außenumfang des Rotorkerns anschmiegen.

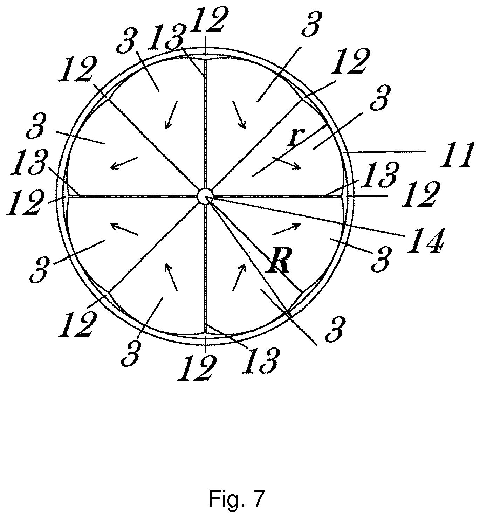

Figur 7 zeigt einen Querschnitt durch einen vierpoligen Rotor gemäß einem weiteren Ausführungsbeispiel mit acht tortenstückähnlichen Permanentmagneten 3, welche in einer Hülle 11 eingebracht sind. Die Freiräume 12 zwischen den Permanentmagneten und der Hülle 11, die Spalte 13 zwischen den Permanentmagneten 3, sowie der Innenraum 14 sind ganz oder teilweise mit Klebstoff oder Vergussmasse gefüllt. Das Drehmoment wird über die Hülle und/oder die Stirnseiten der Permanentmagneten abgeführt, denn die Ausführung verzichtet auf Rotorkern und Welle. Das Verhältnis zwischen dem Radius r der Außenkontur des Permanentmagneten und dem Radius R des die Magneten insgesamt umschreibenden Kreises, der in etwa dem Innendurchmesser der Hülle entspricht beträgt etwa 2/3.

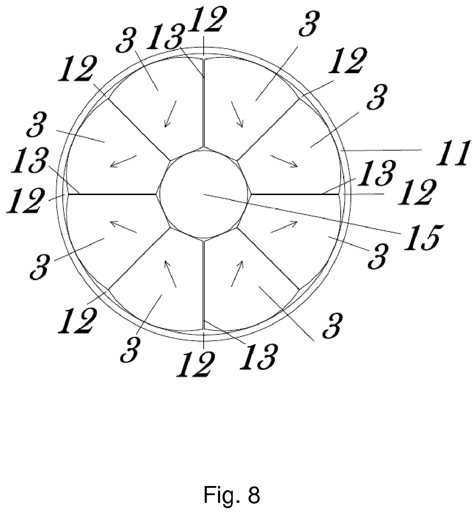

Figur 8 zeigt eine Abwandlung des Ausführungsbeispiels aus Figur 7. Die Abbildung zeigt ebenfalls einen Querschnitt durch einen vierpoligen Rotor mit 8 tortenstückähnlichen Permanentmagneten 3, welche in einer Hülle 11 eingebracht sind. Der Rotor weist zusätzlich zu der Hülle 11 auch eine Welle 15 auf.

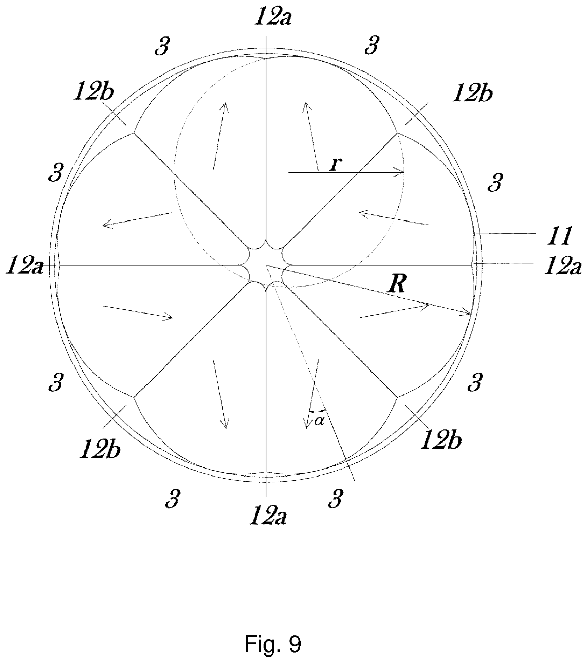

Figur 9 zeigt einen Querschnitt durch einen weiteren erfindungsgemäßen Rotor, bei dem das Kreiszentrum der Außenkontur der Permanentmagneten nicht symmetrisch liegt und sich somit an den Polen 12a eine andere Magnethöhe ausbildet als an den Polübergängen 12b. Der Winkel α beträgt nur 32°. Das Verhältnis zwischen dem Radius der Außenkontur der Permanenntmagneten r und dem Radius R des die Magneten insgesamt umschreibenden Kreises beträgt etwa 1/2.

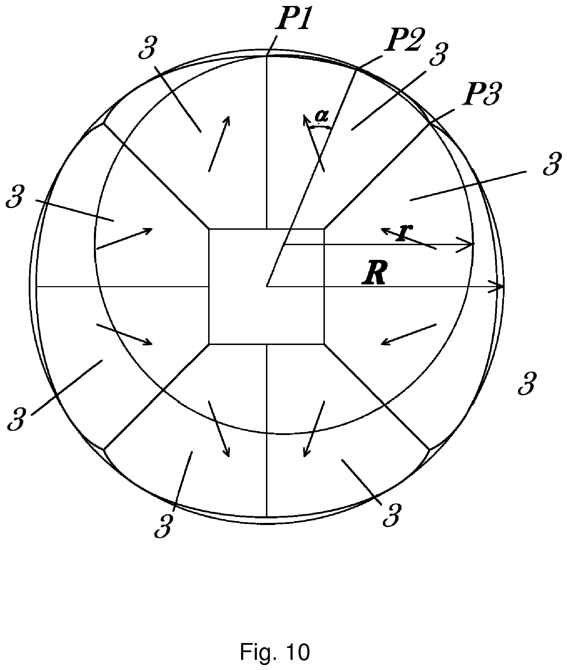

Figur 10 zeigt einen Querschnitt durch einen weiteren erfindungsgemäßen Rotor, bei dem zwei weitere Freiheitsgrade ausgenutzt sind: Die Außenkontur der Permanentmagneten weicht von der Kreisform ab. Der mittlere Radius r der nicht kreisförmigen Kontur wird durch den Kreis bestimmt, der durch die drei Punkte P1, P2, P3 geht. Die Punkte P1 und P3 sind durch die beiden Ecken des Querschnitts bestimmt; der Punkt P2 liegt in der Mitte des Permanentmagneten, gebildet durch den Schnittpunkt der Außenkontur und die Mittelsenkrechte der Strecke von P1 nach P3. Für die Innenkontur wurde ein Quadrat gewählt. Der Winkel α beträgt 42°.

## Patentansprüche

1. Mehrpoliger Rotor (1) für einen Elektromotor, wobei es sich bei dem Rotor (1) um einen Innenläufer handelt, wobei der Rotor (1) mehrere einzelne Permanentmagneten (3) aufweist, die über einen Umfang des Rotors (1) verteilt angeordnet sind und auf derjenigen Seite (4), die dem Luftspalt zwischen einem Stator des Elektromotors und dem Rotor (1) zugewandt ist, in einem Querschnitt des Rotors (1) betrachtet, der orthogonal zu einer Achse (7) des Rotors (1) verläuft, eine konvexe Krümmung aufweisen, wobei
jeweils vier in Umfangsrichtung des Rotors (1) nebeneinander liegende Permanentmagneten (3.1, 3.2, 3.3, 3.4) zusammen ein magnetisches Polpaar (N, S) bilden, wobei die Magnetisierungsrichtung jedes einzelnen Permanentmagneten (3.1, 3.2, 3.3, 3.4) zu einer Bezugsebene (8.1, 8.2, 8.3, 8.4), die durch die Achse (7) des Rotors (1) und durch die Mitte des jeweiligen Permanentmagneten (3.1, 3.2, 3.3, 3.4) verläuft, einen Winkel (α) zwischen 30° und 60° einschließt, wobei der Rotor (1) eine Hülle (11) aufweist, wobei die Permanentmagneten (3) außen von der Hülle (11) umgeben sind, und **dadurch gekennzeichnet dass** die konvexe Krümmung von der Krümmung eines die Permanentmagneten (3) unmittelbar umschreibenden Kreises um die Achse (7) des Rotors (1) abweicht.

2. Rotor (1) nach Anspruch 1, **dadurch gekennzeichnet, dass** der Rotor (1) einen Rotorkern (2) aufweist.

3. Rotor (1) nach Anspruch 1, **dadurch gekennzeichnet, dass** der Rotor (1) keinen Rotorkern aufweist.

4. Rotor (1) nach einem der Ansprüche 1 bis 3, **dadurch gekennzeichnet, dass** die Magnetisierungsrichtung jedes einzelnen Permanentmagneten (3.1, 3.2, 3.3, 3.4) zu der jeweiligen Bezugsebene (8.1, 8.2, 8.3, 8.4) einen Winkel (α) zwischen 40° und 50° einschließt.

5. Rotor (1) nach einem der Ansprüche 1 bis 4, **dadurch gekennzeichnet, dass** jeweils zwei in Umfangsrichtung des Rotors (1) nebeneinander liegende Permanentmagneten (3.1, 3.2, 3.3, 3.4) zusammen einen magnetischen Pol (N, S) bilden, wobei die Magnetisierungsrichtungen dieser beiden Permanentmagneten (3.1, 3.2, 3.3, 3.4) in Bezug auf eine Zwischenebene (9.1, 9.2), die mittig zwischen diesen beiden Permanentmagneten (3.1, 3.2, 3.3, 3.4) und durch die Achse (7) des Rotors (1) verläuft, symmetrisch zueinander sind.

6. Rotor (1) nach einem der Ansprüche 1 bis 5, **dadurch gekennzeichnet, dass** der dritte Permanentmagnet (3.3) einer Gruppe von vier Permanentmagneten (3.1, 3.2, 3.3, 3.4), die in Umfangsrichtung unmittelbar aufeinander folgen, bezogen auf die jeweilige Bezugsebene (8.3) eine Magnetisierungsrichtung aufweist, die entgegengesetzt zu der auf die jeweilige Bezugsebene (8.1) bezogenen Magnetisierungsrichtung des ersten Permanentmagneten (3.1) dieser Gruppe von Permanentmagneten (3.1, 3.2, 3.3, 3.4) verläuft, wobei der vierte Permanentmagnet (3.4) dieser Gruppe von Permanentmagneten (3.1, 3.2, 3.3, 3.4) bezogen auf die jeweilige Bezugsebene (8.4) eine Magnetisierungsrichtung aufweist, die entgegengesetzt zu der auf die jeweilige Bezugsebene (8.2) bezogenen Magnetisierungsrichtung des zweiten Permanentmagneten (3.2) dieser Gruppe von Permanentmagneten (3.1, 3.2, 3.3, 3.4) verläuft.

7. Rotor (1) nach einem der Ansprüche 1 bis 6, **dadurch gekennzeichnet, dass** sich die benachbarten Permanentmagneten jeweils am Polübergang flächig berühren und die benachbarten Permanentmagneten, die zum gleichen Pol gehören einen Spalt mit einer Breite unter 0.3 mm zueinander bilden oder einander berühren.

8. Rotor (1) nach Anspruch 7, **dadurch gekennzeichnet, dass** Seitenflächen (5) der Permanentmagneten (3) in Bezug auf die Achse (7) des Rotors (1) radial verlaufen.

9. Rotor (1) nach einem der Ansprüche 1 bis 8, **dadurch gekennzeichnet, dass** der mittlere Radius (r) der konvexen Krümmung kleiner ist als der Radius (R) des die Permanentmagneten (3) unmittelbar umschreibenden Kreises um die Achse (7) des Rotors (1).

10. Rotor (1) nach Anspruch 9, **dadurch gekennzeichnet, dass** der mittlere Radius (r) der konvexen Krümmung zwischen 15% und 70% des Radius (R) des die Permanentmagneten (3) unmittelbar umschreibenden Kreises um die Achse (7) des Rotors (1) beträgt.

11. Rotor (1) nach einem der Ansprüche 1 bis 10, **dadurch gekennzeichnet, dass** die Permanentmagneten (3) mittels Klebstoff miteinander befestigt sind.

12. Rotor (1) nach Anspruch 1, **dadurch gekennzeichnet, dass** die Permanentmagneten (3) durch einen Klebstoff oder eine Vergussmasse mit der Hülle (11) verbunden sind.

13. Rotor (1) nach einem der Ansprüche 2 und 4 bis 11, **dadurch gekennzeichnet, dass** die Permanentmagneten (3) mittels einer Bandagierung (10) an dem Rotorkern (2) des Rotors (1) befestigt sind.

14. Rotor (1) nach einem der Ansprüche 1 bis 13, **dadurch gekennzeichnet, dass** eine der konvex gekrümmten Seite (4) gegenüberliegende Rückseite (6) der Permanentmagneten (3) eben ist.

15. Rotor (1) nach einem der Ansprüche 2 und 4 bis 13, **dadurch gekennzeichnet, dass** die der konvex gekrümmten Seite (4) gegenüberliegende Rückseite (6) der Permanentmagneten (3) eine Krümmung aufweist, die dem Radius des Rotorkerns (2) entspricht.

16. Rotor (1) nach einem der Ansprüche 1 bis 15, **dadurch gekennzeichnet, dass** die Permanentmagneten (3) einen brotlaibförmigen Querschnitt mit einer Basis, zwei schräg dazu verlaufenden und sich ausgehend von der Basis voneinander entfernenden Seiten sowie einer der Basis gegenüberliegenden konvex gekrümmte Außenseite aufweisen.

17. Rotor (1) nach einem der Ansprüche 1 bis 13, **dadurch gekennzeichnet, dass** die Permanentmagneten (3) einen tortenförmigen Querschnitt aufweisen, der eine Basis, zwei schräg dazu verlaufende und sich ausgehend von der Basis voneinander entfernende Seiten sowie eine der Basis gegenüberliegende konvex gekrümmte Außenseite aufweist, wobei die Basis entweder kürzer ist als die beiden Seiten oder keine Ausdehnung hat, sodass die beiden Seiten des Querschnitts schräg zueinander verlaufen und zusammen mit der konvex gekrümmten Außenseite die Form eines Tortenstücks bilden.

## Claims

1. A multipole rotor (1) for an electric motor, the rotor (1) being an internal rotor, the rotor (1) comprising a plurality of individual permanent magnets (3) which are distributed over a circumference of the rotor and which, when seen in a cross-sectional view of the rotor (1) orthogonal to an axis (7) of the rotor (1), have a convex curvature on the side (4) facing the air gap between a stator of the electric motor and the rotor (1), wherein four respective permanent magnets (3.1, 3.2, 3.3, 3.4), which are juxtaposed in the circumferential direction of the rotor (1), define together a magnetic pole pair (N, S), the magnetization direction of each individual permanent magnet (3.1, 3.2, 3.3, 3.4) enclosing an angle (α) between 30° and 60° with a reference plane (8.1, 8.2, 8.3, 8.4) extending through the axis (7) of the rotor (1) and through the center of the respective permanent magnet (3.1, 3.2, 3.3, 3.4), wherein the rotor comprises an envelope (11), the permanent magnets (3) being encompassed by the envelope (11) on their outer side, and **characterized in that** the convex curvature deviates from the curvature of a circle around the axis (7) of the rotor (1), the circle enveloping the permanent magnets (3) directly.

2. The rotor (1) according to claim 1, **characterized in that** the rotor (1) has a rotor core.

3. The rotor (1) according to claim 1, **characterized in that** the rotor (1) does not have a rotor core.

4. The rotor (1) according to any one of claims 1 to 3, **characterized in that** the magnetization direction of each individual permanent magnet (3.1, 3.2, 3.3, 3.4) encloses an angle (α) between 40° and 50° with the respective reference plane (8.1, 8.2, 8.3, 8.4).

5. The rotor (1) according to any one of claims 1 to 4, **characterized in that** permanent magnets (3.1, 3.2, 3.3, 3.4), which are juxtaposed in the circumferential direction of the rotor (1), define together a magnetic pole (N, S), the magnetization directions of these two permanent magnets (3.1, 3.2, 3.3, 3.4) being symmetric with respect to one another relative to an intermediate plane (9.1, 9.2) extending centrally between these two permanent magnets (3.1, 3.2, 3.3, 3.4) and through the axis (7) of the rotor (1).

6. The rotor (1) according to any one of claims 1 to 5, **characterized in that** the third permanent magnet (3.3) of a group of four permanent magnets (3.1, 3.2, 3.3, 3.4) following directly one after the other in a circumferential direction has, relative to the respective reference plane (8.3), a magnetization direction which is opposite to the magnetization direction of the first permanent magnet (3.1) of this group of permanent magnets (3.1, 3.2, 3.3, 3.4) relative to the respective reference plane (8.1), the fourth permanent magnet (3.4) of this group of permanent magnets (3.1, 3.2, 3.3, 3.4) having, relative to the respective reference plane (8.4), a magnetization direction which is opposite to the magnetization direction of the second permanent magnet (3.2) of this group of permanent magnets (3.1, 3.2, 3.3, 3.4) relative to the respective reference plane (8.2).

7. The rotor (1) according to any one of the claims 1 to 6, **characterized in that** neighbouring permanent magnets are in planar contact with one another at the respective pole transition, and that the neighbouring permanent magnets belonging to the same pole define a gap relative to one another or are in contact with one another, the gap having a width of less than 0.3 mm.

8. The rotor (1) according to claim 7, **characterized in that** side faces (5) of the permanent magnets (3) extend radially relative to the axis (7) of the rotor (1).

9. The rotor (1) according to any one of claims 1 to 8, **characterized in that** the average radius (r) of the convex curvature is smaller than the radius (R) of the circle around the axis (7) of the rotor (1), which circle envelops the permanent magnets (3) directly.

10. The rotor (1) according to claim 9, **characterized in that** the average radius (r) of the convex curvature is between 15 % and 70 % of the radius (R) of the circle around the axis (7) of the rotor (1), which circle envelops the permanent magnets (3) directly.

11. The rotor (1) according to any one of claims 1 to 10, **characterized in that** the permanent magnets (3) are fixed to each other by means of adhesive.

12. The rotor (1) according to claim 1, **characterized in that** the permanent magnets (3) are connected to the envelope (11) by an adhesive or by a potting compound.

13. The rotor (1) according to any one of claims 2 and 4 to 11, **characterized in that** the permanent magnets (3) are fixed to the rotor core (2) of the rotor (1) by means of a bandage (10).

14. The rotor (1) according to any one of claims 1 to 13, **characterized in that** a back (6) of the permanent magnets (3) positioned opposite the convexly curved side (4) is flat.

15. The rotor (1) according to any one of claims 2 and 4 to 13, **characterized in that** the back (6) of the permanent magnets (3) positioned opposite the convexly curved side (4) has a curvature which corresponds to the radius of the rotor core (2).

16. The rotor (1) according to any one of claims 1 to 15, **characterized in that** the permanent magnets (3) have a bread loaf-shaped cross-section with a base, two sides extending obliquely thereto and diverging away from the base, and a convexly curved outer side opposite the base.

17. The rotor (1) according to any one of claims 1 to 13, **characterized in that** the permanent magnets (3) have a pie-shaped cross-section with a base, two sides extending obliquely thereto and diverging away from the base, and a convexly curved outer side opposite the base, the base either being shorter than the two sides or having no extension, so that the two sides of the cross-section extend obliquely to each other and form the shape of a slice of pie with the convexly curved outer side.

## Revendications

1. Rotor multipolaire (1) pour un moteur électrique, dans lequel le rotor (1) est un rotor interne, dans lequel le rotor (1) présente plusieurs aimants permanents (3) individuels qui sont agencés de manière répartie sur une périphérie du rotor (1) et qui présentent une courbure convexe sur le côté (4) faisant face à l'entrefer existant entre un stator du moteur électrique et le rotor (1), considéré selon une section transversale du rotor (1) s'étendant perpendiculairement à un axe (7) du rotor (1), dans lequel respectivement quatre aimants permanents (3.1, 3.2, 3.3, 3.4), juxtaposés dans la direction circonférentielle du rotor (1), forment ensemble une paire de pôles magnétiques (N, S), dans lequel la direction d'aimantation de chaque aimant permanent (3.1, 3.2, 3.3, 3.4) individuel forme un angle (α) compris entre 30° et 60° par rapport à un plan de référence (8.1, 8.2, 8.3, 8.4) passant par l'axe (7) du rotor (1) et par le centre de l'aimant permanent (3.1, 3.2, 3.3, 3.4) respectif, dans lequel le rotor (1) présente une enveloppe (11), dans lequel les aimants permanents (3) sont entourés à l'extérieur par l'enveloppe (11), et **caractérisé en ce que** la courbure convexe s'écarte de la courbure d'un cercle entourant immédiatement les aimants permanents (3) autour de l'axe (7) du rotor (1).

2. Rotor (1) selon la revendication 1, **caractérisé en ce que** le rotor (1) présente un noyau de rotor (2).

3. Rotor (1) selon la revendication 1, **caractérisé en ce que** le rotor (1) ne présente pas de noyau de rotor.

4. Rotor (1) selon l'une quelconque des revendications 1 à 3, **caractérisé en ce que** la direction d'aimantation de chaque aimant permanent (3.1, 3.2, 3.3, 3.4) individuel forme un angle (α) compris entre 40° et 50° par rapport au plan de référence (8.1, 8.2, 8.3, 8.4) respectif.

5. Rotor (1) selon l'une quelconque des revendications 1 à 4, **caractérisé en ce que** respectivement deux aimants permanents (3.1, 3.2, 3.3, 3.4) juxtaposés dans la direction circonférentielle du rotor (1) forment ensemble un pôle magnétique (N, S), dans lequel les directions d'aimantation desdits deux aimants permanents (3.1, 3.2, 3.3, 3.4) sont symétriques l'une par rapport à l'autre par rapport à un plan intermédiaire (9.1, 9.2) s'étendant de manière centrale entre lesdits deux aimants permanents (3.1, 3.2, 3.3, 3.4) et à travers l'axe (7) du rotor (1).

6. Rotor (1) selon l'une quelconque des revendications 1 à 5, **caractérisé en ce que** le troisième aimant permanent (3.3) d'un groupe de quatre aimants permanents (3.1, 3.2, 3.3, 3.4) qui se suivent immédiatement dans la direction circonférentielle présente par rapport au plan de référence (8.3) respectif une direction d'aimantation qui s'étend à l'opposé de la direction d'aimantation, rapportée au plan de référence (8.1) respectif, du premier aimant permanent (3.1) dudit groupe d'aimants permanents (3.1, 3.2, 3.3, 3.4), dans lequel le quatrième aimant permanent (3.4) dudit groupe d'aimants permanents (3.1, 3.2, 3.3, 3.4) présente par rapport au plan de référence (8.4) respectif une direction d'aimantation qui s'étend à l'opposé de la direction d'aimantation, rapportée au plan de référence (8.2) respectif, du deuxième aimant permanent (3.2) dudit groupe d'aimants permanents (3.1, 3.2, 3.3, 3.4).

7. Rotor (1) selon l'une quelconque des revendications 1 à 6, **caractérisé en ce que** les aimants permanents adjacents sont en contact à plat respectivement au niveau de la jonction de pôles et les aimants permanents adjacents appartenant au même pôle forment entre eux un espace d'une largeur inférieure à 0,3 mm ou sont en contact les uns avec les autres.

8. Rotor (1) selon la revendication 7, **caractérisé en ce que** les surfaces latérales (5) des aimants permanents (3) s'étendent de manière radiale par rapport à l'axe (7) du rotor (1).

9. Rotor (1) selon l'une quelconque des revendications 1 à 8, **caractérisé en ce que** le rayon moyen (r) de la courbure convexe est inférieur au rayon (R) du cercle entourant immédiatement les aimants permanents (3) autour de l'axe (7) du rotor (1).

10. Rotor (1) selon la revendication 9, **caractérisé en ce que** le rayon moyen (r) de la courbure convexe est compris entre 15 % et 70 % du rayon (R) du cercle entourant immédiatement les aimants permanents (3) autour de l'axe (7) du rotor (1).

11. Rotor (1) selon l'une quelconque des revendications 1 à 10, **caractérisé en ce que** les aimants permanents (3) sont fixés les uns aux autres au moyen d'un adhésif.

12. Rotor (1) selon la revendication 1, **caractérisé en ce que** les aimants permanents (3) sont reliés à l'enveloppe (11) grâce à un adhésif ou à une masse de scellement.

13. Rotor (1) selon l'une quelconque des revendications 2 et 4 à 11, **caractérisé en ce que** les aimants permanents (3) sont fixés au noyau de rotor (2) du rotor (1) au moyen d'un bandage (10).

14. Rotor (1) selon l'une quelconque des revendications 1 à 13, **caractérisé en ce qu'**un côté arrière (6), opposé au côté (4) incurvé de manière convexe, des aimants permanents (3) est plan.

15. Rotor (1) selon l'une quelconque des revendications 2 et 4 à 13, **caractérisé en ce que** le côté arrière (6), opposé au côté (4) incurvé de manière convexe, des aimants permanents (3) présente une courbure qui correspond au rayon du noyau de rotor (2).

16. Rotor (1) selon l'une quelconque des revendications 1 à 15, **caractérisé en ce que** les aimants permanents (3) présentent une section transversale en forme de miche de pain avec une base, deux côtés s'étendant de manière oblique par rapport à celle-ci et s'éloignant l'un de l'autre à partir de la base, et un côté extérieur incurvé de manière convexe vis-à-vis de la base.

17. Rotor (1) selon l'une quelconque des revendications 1 à 13, **caractérisé en ce que** les aimants permanents (3) présentent une section transversale en forme de part de tarte qui présente une base, deux côtés s'étendant de manière oblique par rapport à celle-ci et s'éloignant l'un de l'autre à partir de la base, et un côté extérieur incurvé de manière convexe vis-à-vis de la base, dans lequel la base est plus courte que les deux côtés ou bien ne possède pas d'extension, de sorte que les deux côtés de la section transversale s'étendent de manière oblique l'un par rapport à l'autre et adoptent avec le côté extérieur incurvé de manière convexe la forme d'une part de tarte.
